# EUROPÄISCHE PATENTSCHRIFT

(11) **EP 0 855 979 B1**
(45) Veröffentlichungstag und Bekanntmachung des Hinweises auf die Patenterteilung: **10.01.2001**
(21) Anmeldenummer: 97942857.0
(22) Anmeldetag: 13.08.1997
(51) Int. Cl.: B61D 17/04, B62D 33/04

(54) **BAUEINHEIT SOWIE VERFAHREN UND MONTAGEVORRICHTUNG ZUM FÜGEN DIESER BAUEINHEIT**
MODULAR UNIT, METHOD AND DEVICE FOR INSERTING SAME
UNITE MODULAIRE, PROCEDE ET SYSTEME DE MONTAGE POUR SON INSERTION

(30) Priorität: 24.08.1996 DE 19634217
(43) Veröffentlichungstag der Anmeldung: 05.08.1998
(73) Patentinhaber: DaimlerChrysler AG, 70567 Stuttgart (DE)
(72) Erfinder: KLEIN, Lothar, D-14053 Berlin (DE); CARSTENSEN, Hartmut, D-13627 Berlin (DE)
(74) Vertreter: Breiter, Achim, Dipl.-Ing. (FH)
(86) Internationale Anmeldenummer: EP9704390
(87) Internationale Veröffentlichungsnummer: WO9807605

(56) Entgegenhaltungen:
- CH-A- 512 697
- DE-A- 4 410 998
- FR-A- 1 603 258
- FR-A- 2 703 114

## Beschreibung

Die Erfindung betrifft eine Baueinheit mit zwei Bauteilen, ein Verfahren zum Fügen dieser Bauteile, sowie eine Montagevorrichtung dafür.

Eine bekannte Baueinheit (EP 0 405 889 A2) weist zwei Wandungspaneele eines Schienenfahrzeug-Wagenkastens auf, die einander paarig zugeordnete Fügeflächen besitzen. Zur Verbindung zusammengehöriger Fügeflächen, der beiden Bauteile dient ein gesondertes Verbindungselement, das zwischen die Bauteile eingesetzt wird und an die Fügeflächen angepaßte Fügelaschen aufweist. Die einander zugeordneten Fügeflächen liegen dabei jeweils in einer gemeinsamen planen oder gewölbten Ebene und sind mit gegenseitigem, von dem Verbin-dungsstück zu überbrückenden Abstand angeordnet. Die Anwendung eines besonderen Verbindungsstücks erfordert einen entsprechenden technischen Aufwand, wobei an dem Verbindungs-stück je zusammengehörigem Fügeflächenpaar zwei eigenständige Fügeverbindungen erforderlich sind. Dabei ist das Verbindungsstück im Querschnitt H-förmig ausgebildet und greift mit seinen freien Schenkelenden zwischen parallele Wandungsabschnitte der Wandpaneele. Dabei muß der Abstand der in ein Paneel einzustekkenden Schenkel genau auf den Abstand der Paneel-Außenwände abgestimmt sein, was zusätzlichen Arbeitsaufwand erfordert. Andernfalls müssen beim Auftreten von Spalten zwischen den Fügefläche äußere Spannmittel angewandt werden, welche die Paneelaußenwände den Fügelaschen am Verbindungsstück annähern.

Der Erfindung liegt die Aufgabe zugrunde, eine Baueinheit zu schaffen, die integrierte Fügehilfsmittel aufweist sowie in einfacher Weise zusammengefügt werden kann und wobei für das Zusammenfügen eine einfach aufgebaute Montagevorrichtung verwendet werden kann.

Die Lösung dieser Aufgabe erfolgt gemäß der Erfindung durch die Merkmale, wie sie insbesondere in den Ansprüchen 1, 3 und 4 angegeben sind.

Bei einer Ausgestaltung einer Baueinheit gemäß der Erfindung greift ein Bauteil mit einem für das Fügen mit zumindest einer Fügefläche versehenen angeformten Fortsatz in eine Gegenaufnahme am zweiten Bauteil ein. Dabei weist die Gegenaufnahme eine Fügefläche auf, die der Fügefläche des eingeschobenen Fortsatzes flächig in paralleler Zuordnung und in der Regel zunächst mit Abstand gegenübersteht.

Den Fügeflächen sind am jeweiligen Bauteil Stützflächen zugeordnet, die sich bei ineinandergeschobenen Bauteilen gegenüberstehen. Die Stützfläche am einzuschiebenden Bauteil befindet sich dabei an einer der zugehörigen Fügefläche abgewandten Bauteilwand, während die Fügefläche des mit der Gegenaufnahme versehenen Bauteils an einer Bauteilwand ausgebildet ist, die der zugehörigen Fügefläche zugewandt ist. Dabei ist der Abstand zwischen der Fügefläche und der Stützfläche am Bauteil mit der Gegenaufnahme größer als der Abstand zwischen der Fügefläche und der Stützfläche des mit dem Fortsatz versehenen Bauteils. Dieser Abstand schwankt je nach den Fertigungstoleranzen der Bauteile zwischen 1/2mm und mehreren Millimetern. Eine so aufgebaute Baueinheit ermöglicht es, zwischen die Stützflächen ein Druckelement einzufügen, welches eine Relativverschiebung der Bauteile in der Weise bewirkt, daß vorhandenes Spiel zwischen den in Anlage zu bringenden Fügeflächen ganz oder zumindest so weit eliminiert werden kann, daß mechanische Fügeelemente, wie z.B. BOM-Blindniete für das Zusammenspannen im Bereich der Fügeflächen zur Anwendung gelangen können. Die zwischen die Stützflächen einzubringende Stützkraft weist demnach eine Kraftkomponente auf, die senkrecht auf die Fügefläche wirkt. Derartige Blindniete sind nur anwendbar, wenn relativ enge Fügespalte mit weniger als 1-2 mm zwischen den Fügeflächen vorhanden sind, sie haben jedoch den Vorteil, daß sie blind, d.h. von einer Seite aus gesetzt werden können. Es ergibt sich zudem eine schnelle und einfache Verarbeitung bei hoher mechanischer Zug- und Scherfestigkeit bei statischen wie bei dynamischen Belastungen der Fügestelle sowie eine verbesserte Vibrationsfestigkeit . Die Fügenaht ist zudem zumindest weitgehend gas- und fuchtigkeitsdicht, nachdem eine konstante Vorspannkraft erreicht wird. Dazu trägt auch bei, daß die Kraftrichtung des Fügeelements senkrecht zu den Fügeflächen wirkt,um diese zusammen zu drücken. Tritt ein Versatz der Kraftrichtung zur Nietachse auf, wird das dadurch entstehende Drehmoment z.B. durch Anwendung des Fügeelements beidseitig an einem Bauteil aufgefangen, um gegenläfige Drehmomente zu erzeugen.

Um die Fügeflächen der beiden Bauteile in dichte Anlage zu bringen, wird bei diesem Aufbau so verfahren, daß zwischen die sich gegenüberstehenden Stützflächen der beiden Bauteile eine zu den Fügeflächen hinwirkende Stützkraft eingeleitet wird. Diese Stützkraft wird bis zu einer solchen Größe gesteigert, bis die Fügeflächen kraftschlüssig aneinander anliegen oder bei längeren Bauteilen neben unmittelbaren Anlagepunkten der Abstand zwischen den Fügeflächen auf ein sehr geringes Maß unter 1 mm vermindert wird. Anschließend werden diese Fügefläche oder unmittelbar benachbarte Spannlaschen oder dgl. durchbohrt und mit Fügeelementen, insbesondere mit BOM-Blindnieten zusammengespannt.

Als Montagevorrichtung für so ausgestaltete Bauteile kann zur Erzeugung der Stützkraft ein insbesondere pneumatisch oder hydraulisch aufweitbarer Dehnkörper, vorzugsweise ein Schlauch in biegeschlaffem Zustand eingefügt werden, der anschließend mit einem Fluid unter Druck gefüllt wird und infolge seiner radialen Aufdehnung die Fügeflächen zumindest partiell in Anlage bringt. Um eine stabile Endlagerung des Schlauchs zu erzielen, ist zumindest eine der Stützflächen konkav vertieft ausgebildet, so daß die Bauteile nicht quer zu ihrer zu den Fügeflächen gerichteten Verstellkraft ausweichen können.

Die Erfindung ist nachfolgend anhand der Prinzipsskizzen von Ausführungsbeispielen näher erläutert.

Es zeigen:
- FIG. 1: Eine Baueinheit aus zwei winklig zueinander stehenden Bauteilen und
- FIG. 2: eine Baueinheit aus zwei an einem Bogenabschnitt zusammenwirkenden Bauteilen.

Zwei Bauteile 1, 2 , die vorzugsweise als Wandmodule aus Strangpreßprofilen für Wagenkästen von Schienenfahrzeugen ausgebildet sind, greifen partiell ineinander und sind für ein maßgenaues Zusammenfügen mit einander zugeordneten Fügeflächen 3 bzw. 4 versehen. Am ersten Bauteil 1 ist ein Fortsatz 5 vorgesehen, der in eine Gegenaufnahme 6 am anderen Bauteil 2 eingreift. Die Gegenaufnahme 6 ist dabei im Querschnitt nach Art eines liegenden U ausgebildet, wobei die zugehörige Fügefläche 3 an einem Schenkelsteg 7 vorgesehen ist und zumindest im wesentlichen senkrecht zur Ebene des zugehörigen Bauteils 2 steht,wobei allerdings die Neigung im konkreten Fall bei etwa 8 Winkelgraden liegt. Dementsprechend ist auch die Fügefläche 4 an dem in die Gegenaufnahme 6 eingeführten Fortsatz 5 des ersten Bauteils in eine parallele Ebene gelegt und steht damit der Fügefläche 3 vor dem Zusammenspannen in der Regel mit Abstand parallel gegenüber, wie es die gestrichelte Linie zeigt. Um die Fügeflächen in die in vollen Linien dargestellte, zumindest weitgehend spaltfreie gegenseitige Anlage zu bringen, befindet sich sowohl im Fortsatz 5 wie an der Gegenaufnahme 6 je eine Stützfläche 8 bzw. 9. Diese Stützflächen 8, 9 stehen sich gegenüber. Dabei ist die Stützfläche 8 des ersten Bauteils 1 an einer Bauteilwand 10 des Fortsatzes 5 vorgesehen und so angeordnet, daß sie auf der der zugehörigen Fügefläche 4 abgewandten Seite dieser Bauteilwand 10 liegt. Dagegen befindet sich die Stützfläche 9 der Gegenaufnahme 6 an einem im wesentlichen parallel zum ersten Schenkelsteg 7 bzw. zur gehörigen Stützfläche 3 verlaufenden Schenkelsteg 11 auf der der Fügefläche 3 zugewandten Seite. Die Fügeflächen 8, 9 sind konkav vertieft ausgebildet in der Weise, daß sie Abschnitte eines Kreises mit einem gemeinsamen Mittelpunkt bilden.

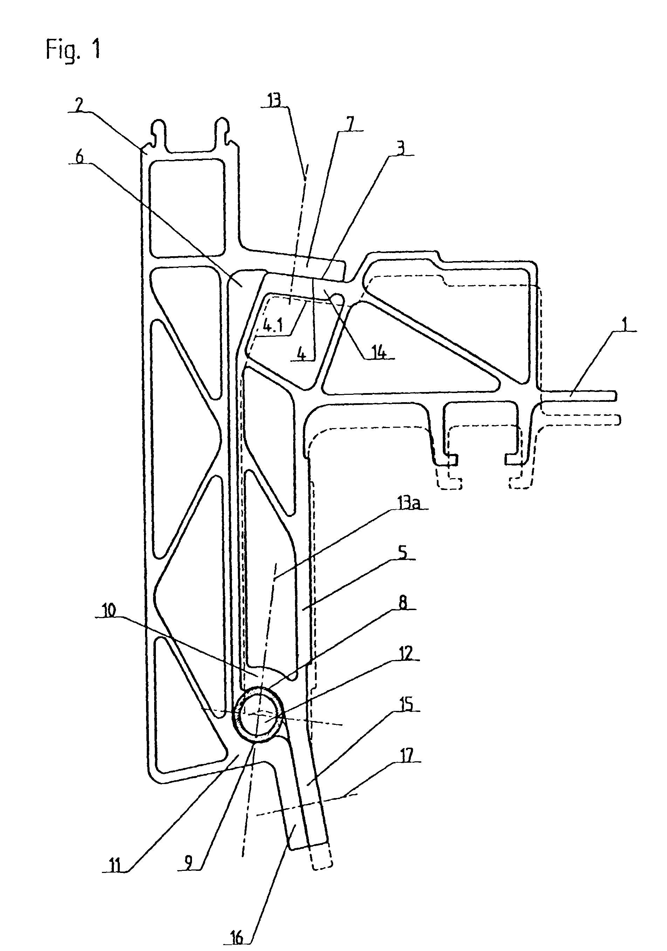

Um den anfänglichen Spalt zwischen den Fügeflächen 3 und 4.1 weitgehend zu eliminieren, ist zwischen die Stützflächen 8, 9 ein Dehnkörper in Form eines Schlauches 12 eingefügt, der mittels Druckluft, öl oder einem entsprechenden Fluid mit solchem Druck gefüllt wird, daß sich die Bauteile 1, 2 relativ so weit zueinander verstellen, bis die Fügeflächen 3, 4 in der in vollen Linien dargestellten Position aneinander angenähert sind. Unter Aufrechterhaltung des Drucks im Schlauch 12 kann dann eine durch eine Mittellinie 13 angedeutete Bohrung durch den Schenkelsteg und die mit der Fügefläche 4 versehene Bauteilwand 14 hindurchgeführt und anschließend mit einem BOM-Blindniet zusammengespannt werden. Die Stützflächen sind dabei in Bezug auf die Fügeflächen 3, 4 so angeordnet, daß eine vom Dehnkörper erzeugte Kraftkompo-nente durch die Fügeflächen 3, 4 hindurchläuft bzw. stehen sich die Stützflächen 8, 9 so gegenüber, daß zumindest eine gemeinsame Flächennormale die Fügeflächen 3, 4 durchdringt. Diese Kraftkomponente ist als strichpunktierte Linie 13a dargestellt, die in der Ausführungsform nach Fig. 1 zumindest weitgehend mit der Mittellinie 13 fluchtet.Nach dem Nieten kann der Schlauch 12 wieder druckentlastet und ggf. aus dem Spalt zwischen den Stützflächen 8, 9 entfernt oder als Dichtung belassen werden. Nach diesem Fügevorgang kann eine weitere Verbindung zwischen den Bauteilen 1 und 2 vorgenommen werden, indem sowohl am Fortsatz 5 wie an der Gegenaufnahme 6 im Bereich der Stützflächen 8, 9 vorgesehene, einander benachbarte Spannlaschen 15, 16 entlang einer Mittellinie 17 durchbohrt und beispielsweise mittels Schließringbolzen, welche größere Fügespaltbreiten zulassen, dauerhaft verbunden werden.

Um das zusammengehörige Fügeflächenpaar 3, 4 der Bauteile 1, 2 in die angestrebte möglichst spaltfreie Anlage zu bringen, kann anstelle eines Schlauches 12 ein anderer Druckkörper verwendet werden, beispielsweise auch ein mechanisch aufweitbarer Dorn oder Exzenterstab.

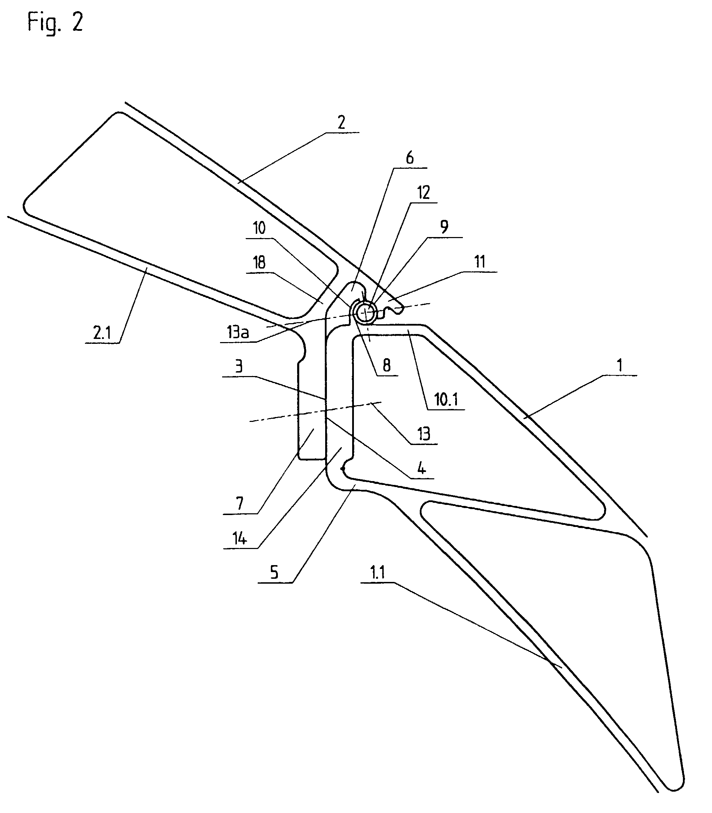

Bei der Ausführungsform nach FIG. 2 bilden die Bauteile 1 und 2 eine Seitenwand und eine Dachwand eines Schienenfahrzeug-Wagenkastens, wobei sich die erfindungsgemäße Verbindungsstelle am bogenförmigen Übergang der beiden als Strangpreßprofile ausgebildeten Bauteile 1 und 2 befindet. Die äußeren Profilstegwandungen stellen dabei die Außenkontur des Wagenkastens dar und laufen in einer entsprechend gekrümmten Ebene im Verbindungsbereich stufenlos ineinander über. An einer Innenwandung 2.1 des als Dachmodul ausgebildeten Bauteils 2 sitzt ein zumindest annähernd senkrecht verlaufender Schenkelsteg 7, der an seiner vom Wageninneren weggewandten Seite eine Fügefläche 3 trägt. Die Außenwandung des Bauteils 2 ragt über einen die Außenwandung und die Innenwandung 2.1 verbindenden Stützsteg 18 hinaus und zur Außenwandung des Bauteils 1 hinüber und weist auf ihrer zum Schenkelsteg 7 hinweisenden Innenseite eine konkav gewölbte Stützfläche 9 auf. Zwischen dieser Bauteilwand 11 und dem Schenkelsteg 7 ist eine Gegenaufnahme 6 gebildet, in die der zugehörige Fortsatz 5 des als Seitenwandmodul ausgebildeten Bauteils 1 eingesetzt ist. Ein zur Außenwandung des Bauteils 1 mit Abstand verlaufender Bauteilsteg 14, der mit einer Innenwandung 1.1 des Bauteils 1 verbunden ist, ist mit der zugehörigen Fügefläche 4 ausgestattet, die im dargestellten Endmontagezustand flächenbündig an der zugehörigen Fügefläche 3 des Dachmodulbauteils 2 anliegt. Um hierbei die für die zumindest spaltfreie Anlage der Fügeflächen 3, 4 erforderliche Kraft zwischen den beiden Bauteilen 1, 2 einwirken lassen zu können, ist am Bauteil 1 eine wiederum in die zugehörige Gegenaufnahme 6 eintauchende Bauteilwand 10 an einen Stützsteg 10.1 angeformt, der am oberen Ende die Außenwandung des Bauteils 1 mit dem die zugehörige Fügefläche 4 aufweisenden Bauteilsteg 14 verbindet. Die Bauteilwand 10 mit der Stützfläche 8 steht der Bauteilwand 11 mit der Stützfläche 9 gegenüber und ist gegengleich konkav gewölbt, um ebenfalls einen Dehnkörper insbesondere einen Schlauch einlegen zu können, dessen Hohlraum 12 mit einem unter Druck einfüllbaren Stützmittel gefüllt werden kann, um die erforderliche Stützkraft zum engen Aneinanderdrücken der Fügeflächen 3, 4 zu erreichen. Es kann dann wiederum entlang der Mittellinie 13 eine Bohrung durch die Bauteile 7, 14 hindurchgeführt und anschließend eine zumindest weitgehend spaltfreie Vernietung der unter mechanischem Druck aneinander anliegenden Stege 7, 14 vorgenommen werden. Danach kann der Dehnkörper zwischen den Stützflächen 8, 9 entspannt und ggf. entfernt werden, wenn bei Anwendung eines Schlauches derselbe nicht als Dichtung zwischen den Stützflächen 8, 9 verbleiben soll.

## Patentansprüche

1. Baueinheit mit zwei Bauteilen, die einander paarig zugeordnete Fügeflächen aufweisen, insbesondere von Wandmodulen aus Strangpreßprofilen für Wagenkästen von Schienenfahrzeugen, dadurch gekennzeichnet, daß die Bauteile (1, 2) zumindest partiell ineinandergreifen, daß den einander parallelflächig gegenüberstehenden Fügeflächen (3, 4) an beiden Bauteilen (1, 2) Stützflächen (8, 9) zugeordnet sind, die sich derart gegenüberstehen, daß zumindest eine gemeinsame Flächennormale die Fügeflächen durchdringt und daß der Abstand zwischen der Fügefläche (4) und der Stützfläche (8) eines ersten Bauteils (1) wenigstens 1/2mm kleiner als der Abstand zwischen der Fügefläche (3) und der Stützfläche (9) des anderen Bauteils (2) ist.

2. Baueinheit nach Anspruch 1, dadurch gekennzeichnet, daß die Differenz der Abstände wenigstens 3mm beträgt.

3. Baueinheit nach Anspruch 1 oder 2, dadurch gekennzeichnet, daß wenigstens eine Stützfläche (8, 9) konkav vertieft ausgebildet ist.

4. Baueinheit nach Anspruch 1 oder einem der Folgenden, dadurch gekennzeichnet, daß ein erstes Bauteil (1) einen Fortsatz (5) aufweist, der in eine Gegenaufnahme (6) am anderen Bauteil (2) eingreift, daß am Fortsatz (5) die Stützfläche (8) an der Seite einer Bauteilwand (10) angeordnet ist, die der Fügefläche (4) abgewandt ist und daß in der Gegenaufnahme (6) die Stützfläche (9) an der Seite einer Bauteilwand (11) angeordnet ist, die der Fügefläche zugewandt ist.

5. Verfahren zum Fügen einer Baueinheit aus zwei zumindest partiell ineinandergreifenden Bauteilen insbesondere nach Anspruch 1 oder einem der Folgenden, die je eine Fügefläche aufweisen, welche paarig jeweils miteinander in Anlage zu bringen sind, und die den Fügefläche abgewandte, einander gegenüberstehende Stützflächen aufweisen, vorzugsweise zum Fügen von Großmodulen an Wagenkästen für Schienenfahrzeuge, dadurch gekennzeichnet, daß zwischen die sich gegenüberstehenden Stützflächen eine zu den Fügeflächen hinwirkenden Stützkraft eingeleitet wird, bis die Fügeflächen zumindest weitgehend spaltfrei gegenüberliegen und daß anschließend diese Fügeflächen durchbohrt und mit Zugankern zusammengespannt werden.

6. Montagevorrichtung zum Fügen einer Baueinheit aus zwei mit Spiel zumindest partiell ineinandergreifenden Bauteilen insbesondere nach Anspruch 1 oder einem der Folgenden, die paarig parallel zueinander angeordnete Fügeflächen und diesem Fügeflächenpaar funktionell zugeordnete, davon abgewandte und einander gegenüberstehende Stützflächen aufweisen, vorzugsweise für Großmodule von Wagenkästen für Schienenfahrzeuge, dadurch gekennzeichnet, daß zwischen die Stützflächen (8, 9) ein Dehnkörper (12) eingefügt wird, der bis zum Zusammenstoßen der Fügeflächen (3, 4) radial aufgedehnt wird.

7. Montagevorrichtung nach Anspruch 6, dadurch gekennzeichnet, daß der Dehnkörper (12) ein elastisch aufweitbarer Schlauch ist.

8. Montagevorrichtung nach Anspruch 6 oder 7, dadurch gekennzeichnet, daß der Dehnkörper (12) über ein einstellbares Drucksteuergerät an eine Druckfluidquelle angeschlossen ist.

## Claims

1. Module with two components with assembly faces assigned to one another in pairs, in particular wall modules of extruded profiles for rail vehicle bodies, characterized in that the components (1, 2) engage at least partly with one another, that the assembly faces (3, 4) on both components (1, 2) which face one another with parallel surfaces have support surfaces (8, 9) which lie opposite one another in such a way that at least one normal to the surface passes through the assembly faces, and that the distance between the assembly face (4) and the support surface (8) of a first component (1) is at least 1/2 mm less than the distance between the assembly face (3) and the support surface (9) of the other component (2).

2. Module according to claim 1, characterized in that the difference between the distances is at least 3 mm.

3. Module according to claim 1 or 2, characterized in that at least one support surface (8, 9) is designed with a concave recess.

4. Module according to claim 1 or any of the following, characterized in that a first component (1) has an extension (5) which engages in a mating location (6) on the other component (2), that on the extension (5) the support surface (8) is located on the side of a component wall (10) facing away from the assembly face (4), and that in the mating location (6) the support surface (9) is located on the side of a component wall (11) facing towards the assembly face.

5. Method of assembling a module from two components which engage at least partly with one another, in particular according to claim 1 or any of the following claims, each having an assembly face for bringing into contact with the other face in pairs, and with opposite support surfaces facing away from the assembly face, preferably for the assembly of large modules to rail vehicle bodies, characterized in that a supporting force acting towards the assembly faces is initiated between the opposing support surfaces until the assembly faces lie opposite one another at least substantially with no gap, and that these assembly faces are then drilled and clamped together with tie bolts.

6. Assembly jig for assembling a module from two components engaging at least partly with one another with play, in particular in accordance with claim 1 or any of the following claims, and which have assembly faces arranged parallel to one another in pairs, and support surfaces functionally assigned to this pair of assembly faces, facing away from the latter and facing one another, preferably for large modules for rail vehicle bodies, characterized in that an expandable element (12) is inserted between the support surfaces (8, 9), and is radially expanded until the assembly faces (3, 4) abut one another.

7. Assembly jig according to claim 6, characterized in that the expandable element (12) is an elastically expandable hose.

8. Assembly jig according to claim 6 or 7, characterized in that the expandable element (12) is connected to a pressure fluid source via an adjustable pressure control unit.

## Revendications

1. Unité modulaire ayant deux composants, qui comportent des surfaces d'assemblage, affectées par paires l'une à l'autre, en particulier de modules de mur en profilés extrudés pour caisses de voitures de véhicules ferroviaires, caractérisée en ce que les composants (1, 2) entrent au moins partiellement en prise l'un dans l'autre ; qu'aux surfaces d'assemblage (3, 4), opposées et parallèles l'une à l'autre, des surfaces d'appui (8, 9) sont affectées au niveau des deux composants (1, 2), surfaces d'appui qui sont opposées de telle sorte qu'au moins une normale commune aux surfaces traverse les surfaces d'assemblage ; et que la distance entre la surface d'assemblage (4) et la surface d'appui (8) d'un premier composant (1) est d'au moins 1/2 mm plus petite que la distance entre la surface d'assemblage (3) et la surface d'appui (9) de l'autre élément (2).

2. Unité modulaire selon la revendication 1, caractérisée en ce que la différence entre les distances est d'au moins 3 mm.

3. Unité modulaire selon la revendication 1 ou 2, caractérisée en ce qu'au moins une surface d'appui (8, 9) est configurée en présentant un renfoncement concave.

4. Unité modulaire selon la revendication 1 ou l'une des suivantes, caractérisée en ce qu'un premier composant (1) comporte un prolongement (5), qui entre en prise avec un contre-logement (6) aménagé dans l'autre composant (2) ; que la surface d'appui (8) est, au niveau du prolongement (5), disposée contre la face d'une paroi de composant (10), qui est opposée à la surface d'assemblage (4) ; et que, dans le contre-logement (6), la surface d'appui (9) est disposée contre la face d'une paroi de composant (11) qui est dirigée vers la surface d'assemblage.

5. Procédé d'assemblage d'une unité modulaire constituée do deux composants, entrant au moins partiellement en prise l'un dans l'autre, en particulier selon la revendication 1 ou l'une des suivantes, dont chacun comporte une surface d'assemblage, les surfaces d'assemblage venant s'appuyer l'une contre l'autre par paires, et qui présentent des surfaces d'appui opposées aux surfaces d'assemblage et opposées l'une à l'autre, de préférence pour assembler des grands modules à des caisses de voiture de véhicules ferroviaires, caractérisé en ce qu'entre les surfaces d'appui opposées l'une à l'autre, on applique une force d'appui, agissant dans la direction des surfaces d'assemblage, jusqu'à ce que les surfaces d'assemblage viennent s'opposer l'une l'autre, au moins presque parfaitement sans fente intermédiaire, puis que ces surfaces d'assemblage subissent un perçage et sont serrées l'une à l'autre à l'aide de tirants d'ancrage.

6. Dispositif de montage pour assembler une unité modulaire constituée de deux composants entrant au moins partiellement en prise l'un dans l'autre avec jeu, an particulier selon la revendication 1 ou l'une des suivantes, qui comportent des surfaces d'assemblage disposées par paires parallèlement l'une à l'autre, et des surfaces d'appui, opposées l'une à l'autre, affectées d'une manière fonctionnelle à cette paire de surfaces d'assemblage et opposées à cette paire, de préférence pour des grands modules de caisses de voitures de véhicules ferroviaires, caractérisé en ce qu'entre les surfaces d'appui (8, 9) est inséré un corps de dilatation (12), qui va se dilater radialement jusqu'à entrer en contact avec les surfaces d'assemblage (3, 4).

7. Dispositif de montage selon la revendication 6, caractérisé en ce que le corps de dilatation est un tuyau flexible pouvant subir un élargissement élastique.

8. Dispositif de montage selon la revendication 6 ou 7, caractérisé en ce que le corps de dilatation (12) est, par l'intermédiaire d'un appareil de commande de pression pouvant être réglé, raccordé à une source de fluide sous pression.
